# EUROPÄISCHE PATENTSCHRIFT

(11) **EP 3 129 831 B1**
(45) Veröffentlichungstag und Bekanntmachung des Hinweises auf die Patenterteilung: **05.05.2021**
(21) Anmeldenummer: 15715184.6
(22) Anmeldetag: 23.03.2015
(51) Int. Cl.: G03B 21/00, G03B 21/26, G03B 21/20, H04N 7/16, H04N 7/167, H04N 9/31, G03B 31/00

(54) **INDIVIDUELLE SICHTBARMACHUNG EINER IN EINER LICHT-PROJEKTION VERBORGENEN BILDINFORMATION**
INDIVIDUAL VISUALIZATION OF IMAGE INFORMATION CONCEALED IN A LIGHT PROJECTION
VISUALISATION INDIVIDUELLE D'UNE INFORMATION D'IMAGE CACHÉE DANS UNE PROJECTION LUMINEUSE

(30) Priorität: 08.04.2014 DE 102014206793
(43) Veröffentlichungstag der Anmeldung: 15.02.2017
(73) Patentinhaber: Kommanditgesellschaft SYNOPTRIX Lichttechnik GmbH & Co., 22303 Hamburg (DE)
(72) Erfinder: PREHN, Horst, 35305 Grünberg (DE)
(74) Vertreter: advotec.
(86) Internationale Anmeldenummer: PCT/EP2015/056126
(87) Internationale Veröffentlichungsnummer: WO 2015/154982

(56) Entgegenhaltungen:
- WO-A1-2010/071620
- US-A- 4 859 994
- US-A- 5 793 470
- US-A1- 2003 025 667
- US-A1- 2005 195 330
- US-A1- 2008 043 209
- US-A1- 2009 059 173
- US-B1- 6 547 396

## Beschreibung

Die vorliegende Erfindung betrifft ein System zur Anzeige visueller Informationen sowie eine Verwendung eines entsprechenden Systems.

Es sind verwandte Systeme bekannt, die es ermöglichen, mittels einer Projektionseinrichtung Licht im sichtbaren Spektralbereich zu projizieren, welches für jeden Betrachter einer Reflektion dieses Lichts als isotropes Leuchtfeld, insbesondere als unterschiedslos weißes Leuchtfeld erscheint, es sei denn, dass das Licht auf eine speziell präparierte Oberfläche fällt. In letztgenanntem Fall wird durch die Reflektion des Lichts an der Oberfläche eine in dem projizierten Licht unsichtbar vorhandene Information für den Betrachter bei Betrachtung der entsprechenden speziellen Oberfläche sichtbar.

Derartige Systeme können zwar in einem gewissen Umfang optische Informationen transportieren, es ist bei bekannten Systemen jedoch nur vorgesehen, dass die Informationsanzeige lediglich von dem Untergrund bzw. der Projektionsfläche abhängt, auf die das Projektionslicht trifft. In einer Vielzahl anderer Anwendungsmöglichkeiten ist es jedoch besonders wünschenswert, wenn die auszugebenden Informationen möglichst flexibel bzw. hochgradig variabel wiedergegeben bzw. ausgegeben werden können. Damit kann die Informationsausgabe bzw. die Informationsanzeige jeweils an den entsprechenden Zweck sowie die entsprechende Situation und gegebenenfalls sogar individuell an den jeweiligen Empfänger der Information angepasst dargestellt bzw. angezeigt werden
Denn visuelle Informationen sind heute im öffentlichen Raum inzwischen überall gegenwärtig. Bild- bzw. Text-Informationen auf Anzeigetafeln, Videowänden, Laufschriften, LED-Displays erscheinen überall und massiv gehäuft und lenken die Aufmerksamkeit des Betrachters ständig auf die jeweils angezeigten Informationen. Aufgrund einer häufig zu beobachtenden Informationsüberflutung insbesondere durch visuelle Informationen und miteinander konkurrierenden visuellen Präsenz kann es dazu kommen, dass wichtige und weniger wichtige Inhalte bzw. Informationen nicht mehr voneinander unterschieden werden können. Mit anderen Worten ausgedrückt bedeutet dies, dass es dem Informationsempfänger immer schwieriger gemacht wird, Informationen gewollt auszufiltern oder zu selektieren, um eine angenehme und als angemessen empfundene Informationsmenge präsentiert bzw. angezeigt zu bekommen.

Tatsächlich ist es in vielen Fällen hingegen von besonderem Vorteil, dass eine bestimmte visuelle Information in der Öffentlichkeit einer allgemeinen Wahrnehmbarkeit nicht zugänglich gemacht werden soll, sondern nur für einen bestimmten und entsprechend bevorrechtigten Informationsempfänger bestimmt ist, sodass dieser nur für sich allein und nur bei Bedarf entsprechend dargebotene visuelle Informationen gezielt entnehmen kann, wohingegen die betreffende Bildgehalt für alle anderen allgemeinen Beobachter nicht wahrnehmbar sein soll.

Dementsprechend ist es die Aufgabe der vorliegenden Erfindung, ein gattungsgemäßes System weiterzubilden sowie eine entsprechende Verwendung eines weitergebildeten Systems vorzuschlagen, wobei das System bzw. die Verwendung des Systems eine hochgradig flexible Anzeige visueller Informationen ermöglicht.

Diese Aufgabe wird durch ein System gemäß dem unabhängigen Anspruch 1 erreicht. Vorteilhafte Aspekte der vorliegenden Erfindung sind Gegenstand der Unteransprüche.

Das erfindungsgemäße System zur Anzeige visueller Informationen umfasst dabei eine Projektoreinrichtung mit einer Lichtquelle und eine Informationseinprägungsvorrichtung, welche zur zweidimensional räumlichen und insbesondere auch zeitlichen Einprägung von Informationen mittels Phasenmodulation in einen Strahlengang der Projektoreinrichtung eingerichtet ist. Weiter umfasst das System zumindest eine Projektionsfläche sowie wahlweise zumindest eine Filtereinrichtung, wobei der erfindungsgemäße Grundgedanke der Erfindung dadurch realisiert wird, dass das System wahlweise zumindest eine Projektionsfläche mit zumindest einer abschnittsweise phasenerhaltenden Oberfläche aufweist und dabei weiter wahlweise, soweit vorgesehen, die Filtereinrichtung in einem Ausgangsstrahlengang zwischen der zumindest einen Projektionsfläche und einem Betrachtungspunkt angeordnet ist, oder wahlweise die Filtereinrichtung unabhängig von der zumindest einen Projektionsfläche in einem Projektionsstrahlengang der Projektoreinrichtung und zwar wahlweise an einem dafür vorgesehenen Ort zwischen einem Ausgang der Informationseinprägungsvorrichtung und der Projektionsfläche angeordnet ist.

In dieser Anmeldung soll Phasenmodulation als gezieltes Ändern der Phase und/oder der Polarisation der Strahlung von einzelnen Strahlen eines Strahlenbündels verstanden werden. Phasenerhaltung stellt in diesem Kontext dementsprechend die Eigenschaft einzelner Strahlen dar, die jeweilige Phasenbeziehung zu anderen Strahlen beizubehalten. Eine Filtereinrichtung, die phasenmodulierte Informationen ausfiltern bzw. sichtbar machen kann, ist dementsprechend so ausgestaltet, dass Licht bzw. Strahlung mit unterschiedlicher Phase bzw. unterschiedlicher Polarisation die Filtereinrichtung selektiv passiert oder eben nicht passiert und ausgefiltert wird, wodurch eine Konversion der für das Auge unsichtbaren Phasenmodulation in eine Amplitudenmodulation erreicht wird und dadurch wiederum die Information sichtbar gemacht wird. Um eine entsprechende Phasenmodulation überhaupt möglich zu machen, setzt das vorgeschlagene System eine Lichtquelle voraus, die Licht bzw. Strahlung mit einer wohl definierten, insbesondere einheitlichen Phasenbeziehung bzw. Polarisation bereitstellt. Eine Informationseinprägungsvorrichtung ist dementsprechend ein aktives optische Element bzw. Bauteil, welches so ausgestaltet ist, dass es eine bestimmte Charakteristik von Strahlung selektiv verändern kann.

Durch das entsprechende System kann eine besonders hohe Vielfalt von unterschiedlichen Formen der Informationsanzeige ermöglicht werden. So kann beispielsweise die anzuzeigende Information von jedem Betrachtungspunkt und unabhängig von der Projektionsoberfläche angezeigt werden, nämlich wenn die Filtereinrichtung im Eingangsstrahlengang zwischen einem Ausgang der Informationseinprägungsvorrichtung und der Projektionsfläche angeordnet ist.

Alternativ dazu kann jedoch auch eine selektive Anzeige der Informationen in Abhängigkeit der Reflektionsfläche erfolgen, wobei hierbei gemäß dem vorgeschlagenen System die Anzeige der Informationen zudem davon abhängt, ob in dem entsprechenden Reflektionsstrahlengang zwischen der Projektionsfläche und einem Betrachtungspunkt eine entsprechende Filtereinrichtung vorgesehen ist. Mit anderen Worten ausgedrückt bedeutet dies, dass das von Projektoreinrichtungen ausgesandte Licht dann als isotropes Leuchtfeld erscheint, wenn es auf eine beliebige, insbesondere nicht phasenerhaltende Projektionsfläche trifft und zudem auch im Falle der Reflektionen von einer phasenerhaltenden Reflektionsfläche nur dann nicht als isotropes Leuchtfeld wahrgenommen wird, wenn zwischen der phasenerhaltenden Projektionsfläche und dem Betrachtungspunkt eine Filtereinrichtung angeordnet ist.

Die letztgenannte wahlweise Ausgestaltung des Systems bietet insbesondere den Vorteil, dass bestimmte visuelle Informationen, wie beispielsweise Text, eine Noten-Partitur oder begleitende Einspielungen von Hintergrund-Informationen oder -Videos und dergleichen bei einer Bühnenveranstaltung oder in Verbindung mit einer Ausstellung bestimmter Exponate an einem beliebigen Betrachtungspunkt der Projektion nicht in Erscheinung treten und dennoch an jedem Betrachtungspunkt ganz individuell angezeigt werden, wenn eine entsprechende Filtereinrichtung im Ausgangsstrahlengang angeordnet ist.

Ein besonderer Vorzug des vorgeschlagenen Systems besteht darin, dass das von der Projektoreinrichtung ausgestrahlte Licht bzw. die Strahlung, selbst wenn es bzw. sie nicht von einer phasenerhaltenden Oberfläche einer Projektionsfläche reflektiert wird oder eine entsprechende Filtereinrichtung nicht im Ausgangsstrahlengang angeordnet ist, als konventionelle Beleuchtung, wie die mittels eines gewöhnlichen Leuchtmittels erzeugte Strahlung wahrgenommen wird.

Insgesamt wird durch die Informationseinprägungsvorrichtung erfindungsgemäß eine Phasenmodulation erzeugt und dadurch die Einprägung von Informationen in den Lichtstrahl erreicht. Hierbei wird in einer Informationseinprägungsvorrichtung für jedes einzelne Segment (Pixel) des Lichtstrahls eine Phasenmodulation in Abhängigkeit von einem betreffenden elektrischen Steuersignal erzeugt.

Die zugrundeliegende Materialeigenschaft, die zur Erzeugung einer Phasenmodulation mittels einer Informationseinprägungsvorrichtung benutzt wird ist beispielsweise die optische Doppelbrechung. Jedes Segment der Informationseinprägungsvorrichtung kann somit mittels eines elektrischen Steuersignals den Polarisationszustand und die Phase des Lichts bzw. der Strahlung unterschiedlich beeinflussen (Modulation).

Unter der erfindungsgemäß bezeichneten Phasenmodulation ist zu verstehen, dass hierbei eine gezielte Änderung der jeweiligen Phasenmodulation jedes einzelnen Segments innerhalb einer Informationseinprägungsvorrichtung mit einer bestimmten Anzahl von Segmenten (Pixel) stattfindet.

Für das bloße Auge bleibt die durch eine Phasenmodulation des Lichts eingeprägte Information jedoch unsichtbar, da hierdurch keine Amplitudenmodulation erfolgt und somit auch keine Information bzw. ein Bildgehalt aufgrund unterschiedlicher Helligkeiten zu entnehmen ist.

Der Grundgedanke der Erfindung beruht deshalb auch auf der Möglichkeit, dass eine Informationseinprägungsvorrichtung wahlweise sowohl zur Phasenmodulation als auch zur Amplitudenmodulation genutzt werden kann. Die Umwandlung bzw. die Konversion der unsichtbaren Phasenmodulation in eine sichtbare Amplitudenmodulation erfolgt im einfachsten Fall mit Hilfe eines zusätzlich in Ausgangsstrahlengang eingebrachten Filtereinrichtung.

Aufgrund der Nutzung der Umwandlungsmöglichkeit zwischen Phasenmodulation und Amplitudenmodulation in Verbindung mit der entsprechend beanspruchten anpassungsfähigen Ausführungen der Lichtprojektion mit Phasenmodulation sowie der zusätzlichen Anwendung phasenerhaltender Projektionsflächen und gegebenenfalls in Verbindung mit dem wahlweisen sowie für jeweils unterschiedliche Verwendungen bestimmten Filtereinrichtungen kann die erfindungsgemäße Informationsanzeige auf besonders flexible Weise ausgestaltet werden.

Wie durch die vorangehenden Ausführungen deutlich wird, ist damit durch das vorgeschlagene System eine Vielzahl von unterschiedlichen Konfigurationen, bis hin zu einer personalisierten Konfiguration eines jeden Betrachtungspunktes, und eine entsprechend angepasste Anzeige von Informationen möglich.

Gemäß einer ersten Variante des Systems ist vorgesehen, dass die Informationseinprägungsvorrichtung als Spatial-Light-Modulator ausgebildet ist, wobei ein Spatial-Light-Modulator ein Bauteil bezeichnet, welches die räumlich und zeitlich selektive Beeinflussung von Strahlung hinsichtlich Phase, Amplitude oder Polarisation bewirkt. Im weitern Sinne der Erfindung soll auch ein elektrooptischer Modulator (OEM)als allgemeine Form eines Spatial-Light-Modulators verstanden und von dieser Ausführung umfasst sein. Ein elektrooptischer Modulator verändert ebenfalls gezielt die Phase und die Polarisation einzelner Strahlen eines Strahlenbündels.

Besonders vorteilhaft ist es zudem, wenn der Spatial-Light-Modulator ein Flüssigkristallpanel (LC-Panel), insbesondere ein Flüssigkristallpanel auf Siliziumbasis (LCoS-Panel, Liquid Crystal on Silicon) aufweist. Mit anderen Worten ausgedrückt stellt ein derartiges LC-Panel ein für besondere Zwecke, wie beispielsweise zur Projektion, ausgebildetes Bauteil in Form eines Spatial-Light-Modulators dar, welches bewirkt, dass die Strahlung bei Transmission (LCD) durch das LC-Panel oder bei Reflexion an dem LC-Panel (LCoS) entsprechend moduliert wird, wobei die Modulation in jedem Punkt (Pixel) des LC-Panels separat angesteuert werden kann. Als Signalgeber für eine solche Steuerung des LC-Panels kann beispielsweise ein Videosignal verwendet werden. Derartige Flüssigkristallpanele finden in der Projektionstechnik bereits vielfach und weitverbreitet Anwendung und sind daher in entsprechend hoher Qualität bei gleichzeitig vergleichsweise geringen Kosten erhältlich. Zudem haben die Flüssigkristallpanele eine besonders gute Charakteristik im Hinblick auf die Einprägung von Informationen in einen Strahlengang mittels Phasenmodulierung. So ermöglichen derartige Flüssigkristallpanele beispielsweise eine hohe zeitliche Auflösung der Phasenmodulierung bzw. Informationseinprägung, sodass Informationen in Form einer zeitlichen Abfolge von zweidimensionalen Bildern in den Strahlengang eingeprägt werden können, die an einem entsprechenden Betrachtungspunkt bei entsprechender Phasenerhaltung und anschließender Modulationskonversion von einer Phasenmodulation in eine Amplitudenmodulation als bewegte Bilder wahrgenommen werden können.

Besonders vorteilhaft ist es auch, wenn eine Mehrzahl derartiger Flüssigkristallpanele von der Informationseinprägungsvorrichtung umfasst sind. In diesem Fall kann jedes der Flüssigkristallpanele so ausgestaltet sein, dass Informationen in einer bestimmten Farbe in den Strahlengang der Projektoreinrichtung einprägt werden, sodass bei der entsprechenden Überlagerung je nach Projektionsfläche und Anordnung der Filtereinrichtung mehrfarbige bzw. bunte Informationen angezeigt werden können. Dementsprechend ist vorgesehen, dass die Informationseinprägungsvorrichtung mehrere, insbesondere drei Flüssigkristallpanele aufweist, wobei jeweils ein Flüssigkristallpanel Informationen einer bestimmten Farbe in den Strahlengang der Projektoreinrichtung einprägt.

Zudem wird die große Flexibilität bei der Anzeige von Informationen mittels des vorgeschlagenen Systems besonders vorteilhaft weiterentwickelt, wenn die Projektoreinrichtung eine Wechselvorrichtung aufweist, die zur Aufnahme einer Filtereinrichtung ausgebildet ist, wobei die Wechselvorrichtung das Einführen und Entnehmen der Filtereinrichtung in den bzw. aus dem Strahlengang der Projektoreinrichtung ermöglicht.

Dadurch wird einerseits erreicht, dass die Filtereinrichtung bei der Anordnung im Eingangsstrahlengang in der Projektoreinrichtung selbst angeordnet wird, wodurch das vorgeschlagene System besonders kompakt wird. Zudem ermöglicht eine derartige Wechselvorrichtung der Projektoreinrichtung, dass die Filtereinrichtung den gesamten Strahlengang innerhalb der Projektoreinrichtung erfasst. Und schließlich wird dadurch ein besonders bequemes und schnelles Umkonfigurieren des vorgeschlagenen Systems ermöglicht, nämlich zwischen dem wahlweisen Zustand, in dem unabhängig von der Beschaffenheit der Projektionsfläche und dem Betrachtungspunkt die Anzeige der Informationen ermöglicht wird, und dem gleichermaßen wahlweisen Zustand, in dem lediglich bei Positionierung der Filtereinrichtung im Reflektionsstrahlengang ausgehend von der zumindest einen Projektionsfläche sowie der entsprechenden phasenerhaltenden Beschaffenheit der Oberfläche der Projektionsfläche eine Informationsanzeige ermöglicht wird.

Weiter ist es besonders vorteilhaft für das vorgeschlagene System, wenn die zumindest eine Projektionsfläche transluzent ausgebildet ist. In diesem Fall kann das System in Form eines Rückprojektionssystems ausgebildet sein, wobei ebenfalls die oben beschriebene Flexibilität gleichermaßen durch die entsprechende wahlweise Ausgestaltung des Systems erreicht werden kann.

Für den Fall, dass ein Rückprojektionssystem mittels einer transluzenten Projektionsfläche ebenfalls eine zumindest abschnittsweise phasenerhaltende Oberfläche aufweisen soll, kann vorgesehen sein, dass mit Hilfe einer Folie oder einem sonstigen durchsichtigen Träger, auf die entsprechende Beschichtungsmaterialien aufgebracht werden, eine transluzente Projektionsfläche entsteht, die sowohl einen geeigneten Bildkontrast sowie zumindest bereichsweise bzw. abschnittsweise phasenerhaltende Eigenschaften bzw. phasenerhaltende Oberfläche aufweist. Entsprechendes kann beispielsweise mit einem Logofilm erreicht werden.

Alternativ dazu kann jedoch auch vorgesehen sein, dass zumindest eine Projektionsfläche reflektierend ausgebildet ist. Dabei kann es sich sowohl um beliebig reflektierende Projektionsflächen als auch um entsprechend phasenerhaltende reflektierende Projektionsflächen handeln. Im Falle derartig reflektierender Projektionsflächen kann besonders vorteilhaft eine große räumliche Distanz zwischen der Projektoreinrichtung und der bzw. den entsprechenden Projektionsflächen überwunden werden.

Das vorgeschlagene System eignet sich besonders für eine mehrfach wahlweise bzw. selektive Anzeige von Informationen im Bereich kultureller Einrichtungen, wie beispielsweise Museen, Theater und dergleichen. Dementsprechend kann vorgesehen sein, dass zumindest eine Projektionsfläche des Systems durch ein zu beleuchtendes Objekt, insbesondere ein Ausstellungsgegenstand oder Exponat, gebildet wird. Gleichermaßen eignen sich auch Künstler bzw. Kulissen oder Kulissenteile als entsprechende Projektionsflächen. Im Falle der Beleuchtung eines Ausstellungsgegenstands oder Exponats, die in der Regel nicht über eine entsprechende phasenerhaltende Oberfläche verfügen, wird durch das entsprechende System trotzdem immer auch eine entsprechende Ausleuchtung bzw. Beleuchtung des Stands oder Exponats erreicht, wodurch mit dem vorgeschlagenen System nicht nur eine wahlweise und/oder selektive Anzeige von Informationen auf oder in der Umgebung des Ausstellungsgegenstands oder Exponats erreicht werden kann, sondern zudem bzw. gleichzeitig auch eine benötigte oder erwünschte Beleuchtung bzw. Ausleuchtung erfolgt.

Besonders vorteilhaft ist es zudem, wenn die Filtereinrichtung als Phasenfilter ausgestaltet ist. Dadurch wird eine einfache und effektive Konversion der Phasenmodulation seitens der Informationseinprägungsvorrichtung ermöglicht. Mit anderen Worten ausgedrückt ist in dieser Ausgestaltung die Filtereinrichtung ein optisches Element bzw. Bauteil, welches eine beispielsweise linear polarisierte Lichtwelle auf selektive Weise hinsichtlich ihrer Phase und Ausrichtung passieren lässt. Dementsprechend wird die Filtereinrichtung zur selektiven Umwandlung und dadurch zu einer Modulationskonversion einer Phasenmodulation in eine Amplitudenmodulation verwendet, wodurch die in die Strahlung eingeprägte Information aus einer Phasenmodulation in eine Amplitudenmodulation überführt wird, und die Information folglich sichtbar wird.

Ganz besonders vorteilhaft ist es, wenn dabei eine Filtereinrichtung des Systems, die im Ausgangsstrahlengang angeordnet ist, eine variable, insbesondere räumlich variable Filtereinrichtung aufweist. Dies führt dazu, dass die Filtereinrichtung an jedem Betrachtungspunkt so eingestellt werden kann, dass eine optimale Filterwirkung bzw. Konversionswirkung erreicht wird und somit die visuellen Informationen, die seitens der Informationseinprägevorrichtung der Projektoreinrichtung in den Strahlengang der Projektoreinrichtung eingeprägt wurden, am Betrachtungspunkt entsprechend gefiltert bzw. in eine für das bloße Auge sichtbare Amplitudenmodulation konvertiert werden können.

Außerdem ist es besonders vorteilhaft, wenn die Filtereinrichtung im Ausgangsstrahlengang als mobile Filtereinrichtung, insbesondere als binoculare Filtereinrichtung ausgebildet ist. Derartige Filtereinrichtungen können beispielsweise in Form einer Brille ausgebildet sein, die als Brillengläser bzw. anstatt der Brillengläser entsprechende Filter aufweist. In der Kombination mit der vorigen Ausführung können solche Filterbrillen so ausgestaltet sein, dass die jeweils gewünschte Ausrichtung der Filterrichtung durch Rotation der Filtereinrichtung(en) bzw. Brillengläser erreicht wird.

Insgesamt wird dadurch die selektive bzw. wahlweise Anzeige von Informationen in einfacher Weise durch das Aufsetzen bzw. Absetzen einer entsprechenden Filterbrille ermöglicht. Zudem kann durch die besondere Mobilität einer derartigen Filtereinrichtung reflektiertes Licht bzw. Licht aus dem Ausgangsstrahlengang, welches von einer zumindest abschnittsweise mit phasenerhaltender Oberfläche ausgestatteten Projektionsfläche reflektiert wurde und dementsprechend die Information umfasst, welche mittels der Informationseinprägungsvorrichtung eingeprägt wurde, an jedem beliebigen Betrachtungspunkt angezeigt werden, an dem entsprechendes reflektiertes Licht bzw. ein Teil des Ausgangsstrahlengangs ankommt.

Ebenfalls besonders vorteilhaft kann es sein, wenn das vorgeschlagene System zudem eine Ausgabevorrichtung für akustische Informationen umfasst. Dadurch wird eine noch stärker individualisierbare bzw. wahlweise selektive Informationsvermittlung möglich.

Weiter vorteilhaft ist es, wenn eine entsprechende akustische Ausgabevorrichtung als mobile, insbesondere persönliche Ausgabevorrichtung ausgestaltet ist. Derartige Ausgabevorrichtungen können beispielsweise in Form von kleinen Lautsprechern oder verschiedenen Arten von Kopfhörern vorgesehen werden.

Die Informationsvermittlung mittels des vorgeschlagenen Systems kann beim Vorsehen einer akustischen Ausgabevorrichtung besonders vorteilhaft weiter entwickelt werden, wenn die Projektoreinrichtung und die zumindest eine akustische Ausgabevorrichtung informationstechnisch miteinander verbunden und insbesondere miteinander synchronisiert sind. Dadurch kann erreicht werden, dass beispielsweise visuelle Informationen und akustische Informationen entsprechend wechselnd oder parallel bzw. gleichzeitig vermittelt werden.

Gegenstand der vorliegenden Erfindung ist zudem die Verwendung eines Systems in einer der vorangehend beschriebenen Ausprägungen, wobei die Verwendung des Systems eine mehrstufig wahlweise Anzeige von Informationen auf zumindest einer Projektionsfläche ermöglicht, wobei die Verwendung wahlweise die Anzeige von keinerlei Informationen trotz Betrieb der Lichtquelle, insbesondere zu Beleuchtungszwecken; die Anzeige von Informationen in Abhängigkeit der räumlichen Anordnung von zumindest einer Projektionsfläche, einer Filtereinrichtung und einem Betrachtungspunkt sowie der Beschaffenheit der Projektionsfläche; und schließlich ebenfalls wahlweise die Anzeige von Informationen unabhängig vom Betrachtungspunkt sowie der Beschaffenheit der Projektionsfläche ermöglicht. Eine derartige Verwendung des Systems führt dazu, dass das System optimal an die entsprechenden Einsatzbedingungen angepasst werden kann und zugleich eine hohe Flexibilität im Hinblick auf die jeweilige Anzeige von Informationen erhalten bleibt.

Nachfolgend werden einzelne Ausgestaltungen der vorgeschlagenen Erfindung anhand der schematischen Figuren beispielhaft erläutert.

Es zeigen:
- **Fig. 1**: ein erfindungsgemäßes System in einer ersten in sich variablen Ausgestaltung;
- **Fig. 2a**: ein erfindungsgemäßes System in einer zweiten Ausgestaltung; und
- **Fig. 2b**: ein erfindungsgemäßes System in einer dritten Ausgestaltungsform.

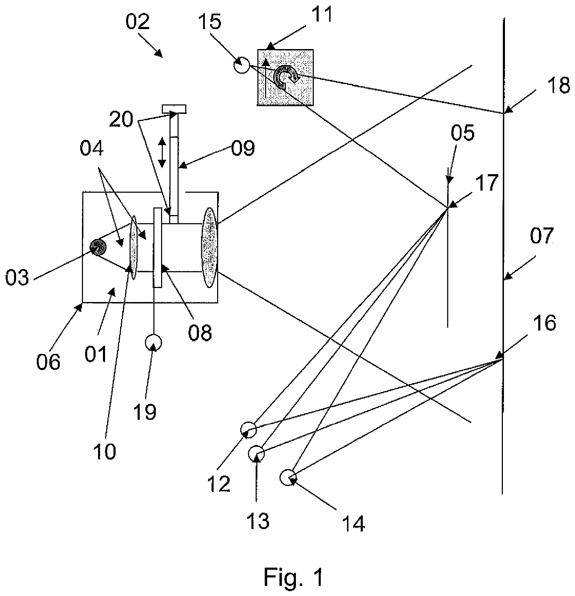

**Fig. 1** zeigt eine Projektoreinrichtung 01 mit einer Lichtquelle 03 sowie zwei Projektionsflächen 05 und 07. Das System 02 der **Fig. 1** zeigt die beiden wahlweisen Anordnungen zweier Filtereinrichtungen 09 und 11. Zudem sind in der **Fig. 1** exemplarisch vier Betrachtungspunkte 12 bis 15 dargestellt sowie die von den Betrachtungspunkten 12 bis 15 ausgehenden Ausgangsstrahlengänge von drei Bildpunkten 16 bis 18 der Projektionsflächen 05 und 07 zu den entsprechenden Betrachtungspunkten 12 bis 15.

Wie in **Fig. 1** einfach erkennbar ist, ist das vorgeschlagene System als Reflektionssystem, im Gegensatz zu einem Rückprojektionssystem, mit entsprechend reflektierenden Projektionsflächen 05 und 07 ausgestaltet. Insgesamt erzeugt die Lichtquelle 03 der Projektoreinrichtung 01 ein Licht bzw. elektromagnetische Strahlung im sichtbaren Frequenzbereich mit einer wohl definierten, insbesondere über die zweidimensionale Ausbreitung des Strahlengangs 04 konstanten Phasenausrichtung bzw. Phaseneinstellung. Dazu können entweder entsprechende Lichtquellen 03 verwendet werden, die derartig einheitliches bzw. in der Phasenbeziehung einheitliches Licht erzeugen, oder eine Optik 10 vorgesehen sein, die eine entsprechende einheitliche Phasenbeziehung einer beliebigen Lichtquelle herstellt. Da es sich um ein Reflexionssystem handelt, sind alle Strahlen zwischen der Lichtquelle 03 und den Projektionsflächen 05, 07 als Eingangsstrahlengang zu verstehen und die Strahlen bzw. die Strahlung, die an den Projektionsflächen 05, 07 reflektiert wird, als Ausgangsstrahlengang zu verstehen. Mit anderen Worten ausgedrückt bedeutet dies, dass die Bezeichnungen Eingangs- und Ausgangsstrahlengang bezüglich der Projektionsflächen 05, 07 definiert sind.

Neben der Lichtquelle 03 ist innerhalb eines Gehäuses 06 der Projektoreinrichtung 01 ebenfalls eine Informationseinprägungsvorrichtung 08 angeordnet, die beispielsweise durch nicht dargestellte Flüssigkristallpanele Informationen mittels selektiver Phasenmodulation in einzelne Strahlen des Strahlengangs bzw. für einzelne Bildpunkte in den Strahlengang 04 der Projektoreinrichtung einprägt. Die räumliche sowie zeitliche selektive Phasenmodulation mittels der Informationseinprägungsvorrichtung 08 erfolgt über entsprechende Steuersignale, die beispielsweise von einer extern zur Projektoreinrichtung angeordneten Steuerquelle 19 bereitgestellt werden.

Dementsprechend verlässt die Strahlung bzw. das Licht in einem ersten Zustand des Systems, wie sie in **Fig. 1** dargestellt ist, entsprechend phasenmoduliert die Projektoreinrichtung 01. Die Strahlung wird dann von den beiden Projektionsflächen 05 und 07 reflektiert und trifft auf die Betrachtungspunkte 12 bis 15. Im Beispiel der **Fig. 1** handelt es sich bei der Projektionsfläche 05 um eine Projektionsfläche mit zumindest abschnittsweise phasenerhaltender Oberfläche. Im Gegensatz dazu ist die Projektionsfläche 07 eine beliebige Projektionsfläche. An den Betrachtungspunkten 12, 13 und 14 ist die Phaseninformation in der von der Projektionsfläche 05 reflektierten Strahlung zwar noch vorhanden, jedoch fehlt an diesen Betrachtungspunkten bzw. im Ausgangsstrahlengang von der Projektionsfläche 05 zu den Betrachtungspunkten 12 bis 14 eine entsprechende Filtereinrichtung, um die entsprechende Information zu konvertieren und damit sichtbar zu machen. Dementsprechend erscheint in den Betrachtungspunkten 12 bis 14 die von der Projektionsfläche 05 reflektierte Strahlung lediglich als undifferenziertes isotropes Leuchtfeld.

An den Betrachtungspunkten 12 bis 14 trifft ebenfalls die an der Projektionsfläche 07 reflektierte Strahlung als undifferenziertes isotropes Leuchtfeld ein, da durch die nichtphasenerhaltende Eigenschaft der Projektionsfläche 07 die von der Informationseinprägungsvorrichtung erzeugte Phasenmodulierung bei der Reflexion an der Projektionsfläche 07 verloren gegangen ist.

Am Betrachtungspunkt 15 hingegen befindet sich im Ausgangsstrahlengang zwischen der Projektionsfläche 05 und dem Betrachtungspunkt 15 sowie im Ausgangsstrahlengang zwischen der Projektionsfläche 07 und dem Betrachtungspunkt 15 eine entsprechende Filtereinrichtung 11. Dementsprechend kann die Information im Rahmen der von der Projektionsfläche 05 reflektierten Strahlung am Betrachtungspunkt 15 konvertiert und damit sichtbar gemacht werden bzw. angezeigt werden. Wie durch die beiden Pfeile der Filtereinrichtung 11 angedeutet, weist die Filtereinrichtung eine bestimmte Filterrichtung auf, die mittels geeigneten Einstellmitteln eingestellt werden kann. Hingegen ist auch im Betrachtungspunkt 15 eine Anzeige von Informationen selbst bei der vorhandenen Filtereinrichtung 11 für Strahlung, die von der Projektionsfläche 07 reflektiert wird, nicht möglich, da die entsprechende Phasenmodulierung aufgrund der nicht phasenerhaltenden Reflektion an der beliebigen Projektionsfläche 07 verloren gegangen ist.

In **Fig. 1** ebenfalls dargestellt ist eine weitere Filtereinrichtung 09, die von einer Wechselvorrichtung 20 aufgenommen ist und sich bezüglich der Projektoreinrichtung 01 zusammen mit der Wechselvorrichtung bewegen lässt, wie es durch den Pfeil der **Fig. 1** angedeutet ist. Für den Fall, dass die Filtereinrichtung 09 mit der Wechselvorrichtung 20 in den Strahlengang 04 der Projektoreinrichtung 01 eingeführt wird, so erfolgt noch innerhalb der Projektoreinrichtung 01 eine Konversion der von der Informationseinprägungsvorrichtung 08 erzeugten Phasenmodulierung, noch bevor die Strahlung die Projektoreinrichtung verlässt. In diesem, in **Fig. 1** nicht dargestellten Zustand, wird die entsprechende visuelle Information an allen Betrachtungspunkten 12 bis 15 und unabhängig von der jeweiligen Projektionsfläche 05 oder 07 sichtbar gemacht. Dementsprechend ist die Filtereinrichtung 11 entbehrlich bzw. hat keine weitere Auswirkung auf die Anzeige der visuellen Informationen bzw. ihre Wahrnehmbarkeit in Abhängigkeit von der Projektionsfläche oder dem Betrachtungspunkt.

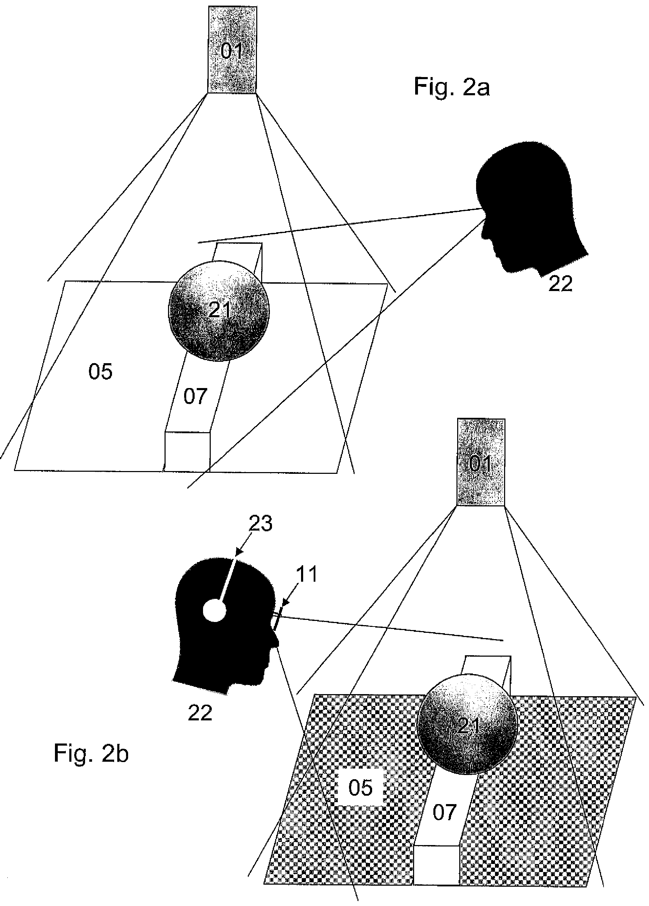

**Fig. 2a** zeigt ein System, welches eine Projektoreinrichtung 01, eine erste Projektionsfläche 05 mit phasenerhaltender Oberfläche, eine zweite Projektionsfläche 07 mit beliebiger Beschaffenheit sowie eine dritte Projektionsoberfläche 21, die von einem Exponat oder Ausstellungsgegenstand gebildet wird, aufweist. Die in **Fig. 2a** gezeigte Silhouette stellt einen Betrachtungspunkt 22 dar, von dem aus die Projektionsflächen 05, 07 und 21 betrachtet werden können. In dem Beispiel der **Fig. 2a** ist des Weiteren keinerlei Filtereinrichtung vorgesehen. Dementsprechend kann selbst die von der mit einer phasenerhaltenden Oberfläche versehenen Projektionsfläche 05 reflektierte Strahlung der Projektoreinrichtung 01 am Betrachtungspunkt 22 nicht in eine Amplitudenmodulation konvertiert werden. Folglich erscheint die von der Projektoreinrichtung ausgehende und von den Projektionsflächen reflektierte Strahlung am Betrachtungspunkt 22 insgesamt als undifferenziertes isotropes Leuchtfeld. Mit anderen Worten ausgedrückt bedeutet dies, dass die Projektoreinrichtung 01 am Betrachtungspunkt 22 lediglich als gewöhnliche Beleuchtung aller Projektionsflächen wahrgenommen wird.

Das System der **Fig. 2b** ist weitgehend identisch mit dem System der **Fig. 2a****.** Zusätzlich zu dem Zustand der **Fig. 2a** ist jedoch im Ausgangsstrahlengang zwischen dem Betrachtungspunkt 22 und den Projektionsflächen 05, 07 und 21 eine Filtereinrichtung 11 vorgesehen. Diese Filtereinrichtung ist als mobile und binoculare Filtereinrichtung in Form einer Brille ausgestaltet, die als Brillengläser bzw. anstatt der Brillengläser entsprechende Filterelemente aufweist. Wie durch die schachbrettmusterartige Schraffierung der Projektionsfläche 05 der **Fig. 2b** schematisch angedeutet, wird am Betrachtungspunkt 22 durch das Vorsehen der entsprechenden Filtereinrichtung 11 die mittels Phasenmodulierung in der von der Projektoreinrichtung 01 stammenden Strahlung vorhandene visuelle Information sichtbar bzw. angezeigt. Zudem wird am Betrachtungspunkt 22 die von der Projektionsfläche 07 und der Projektionsfläche 21 reflektierte Strahlung als undifferenziertes isotropes Leuchtfeld bzw. als gleichmäßige, aber unstrukturierte Beleuchtung der Projektionsflächen 07 und 21 wahrgenommen.

Wie aus dem Vergleich der **Fig. 2a** und **2b** einfach erkennbar ist, besteht eine der vorteilhaften Wirkungen des vorgeschlagenen Systems darin, dass an einem Betrachtungspunkt 22 abhängig vom Vorhandensein der Filtereinrichtung 11 im entsprechenden Ausgangsstrahlengang zusätzliche visuelle Informationen angezeigt werden bzw. wahrgenommen werden können. Folglich ist dadurch eine individuelle Informationsanzeige möglich, die am Betrachtungspunkt 22 vom Betrachter beispielsweise durch Aufsetzen der entsprechenden Brille mit Filterwirkung ermöglicht wird.

Wie in **Fig. 2b** zudem schematisch dargestellt, umfasst das System zudem eine akustische Ausgabevorrichtung in Form einer mobilen, persönlichen Ausgabevorrichtung 23. Diese ermöglicht, abgestimmt auf die jeweilige visuelle Information zusätzlich oder alternativ akustische Information am Betrachtungspunkt 22 bereit zu stellen.

## Patentansprüche

1. System (02) zur Anzeige visueller Informationen umfassend eine Projektoreinrichtung (01) mit einer Lichtquelle (03) und einer Informationseinprägungsvorrichtung (08), welche zumindest zweidimensional räumlich und insbesondere zeitlich aufgelöste Informationen mittels Phasenmodulation in einen Strahlengang (04) der Projektoreinrichtung (01) einprägt, wobei das System (02) zumindest eine erste Projektionsfläche (05) mit einer zumindest abschnittsweise phasenerhaltenden Oberfläche aufweist, wobei das System zumindest eine erste Filtereinrichtung (11) aufweist, die in einem Ausgangsstrahlengang zwischen der Projektionsfläche (05) und einem Betrachtungspunkt (15) wahlweise angeordnet ist, wobei das System eine zweite Filtereinrichtung (09) aufweist, die in der Projektoreinrichtung in einem Eingangsstrahlengang zwischen einem Ausgang der Informationseinprägungsvorrichtung (08) und der Projektionsfläche (05) wahlweise angeordnet ist, wobei mittels der Filtereinrichtungen (09, 11) die Phasenmodulation in eine Amplitudenmodulation jeweils umwandelbar ist, und wobei das System (02)
eine zweite Projektionsfläche (07) sowie eine dritte Projektionsfläche (21) mit jeweils einer nicht phasenerhaltenden Oberfläche aufweist, wodurch die Phasenmodulation dort verloren geht, und wobei die dritte Projektionsfläche (21) durch ein zu beleuchtendes Objekt (21), insbesondere durch einen Ausstellungsgegenstand oder ein Exponat gebildet wird, wobei das System zur gemeinsamen Beleuchtung der Projektionsflächen durch die Projektoreinrichtung angeordnet ist, und wobei mittels der wahlweisen räumlichen Anordnung der jeweiligen Filtereinrichtungen (11, 09) und aufgrund der phasenerhaltenden oder nicht phasenerhaltenden Beschaffenheit der jeweiligen Projektionsflächen (05, 07, 21) und deren Anordnung bei einer gemeinsamen Beleuchtung der jeweiligen Projektionsflächen (05, 07, 21) unterschiedliche Formen der Informationsanzeige bewirkt werden, sodass bei nicht in die Projektoreinrichtung eingeführter zweiter Filtereinrichtung auf der zweiten und dritten Projektionsfläche (07, 21) keinerlei Informationen angezeigt wird und unabhängig davon, ob eine Information durch Phasenmodulation eingeprägt ist oder nicht, ein undifferenziertes isotropes Leuchtfeld sichtbar wird und aufgrund der phasenerhaltenden Beschaffenheit der ersten Projektionsfläche (05) eine selektive Anzeige von durch Phasenmodulation eingeprägter Informationen mittels der ersten Filtereinrichtung (11) erfolgt, und sodass durch das Einführen der zweiten Filtereinrichtung (09) in die Projektoreinrichtung (01) unabhängig von der phasenerhaltenden oder nicht phasenerhaltenden Beschaffenheit der jeweiligen Projektionsflächen (05, 07, 21), unabhängig vom jeweiligen Betrachtungspunkt (12, 13, 14, 15) und unabhängig von dem Vorhandensein der ersten Filtereinrichtung (11) allgemein sichtbar eine Anzeige von Informationen erfolgt.

2. System (02) nach Anspruch 1,
**dadurch gekennzeichnet,**
**dass** die Informationseinprägungsvorrichtung (08) zumindest einen Spatial-Light-Modulator (SLM) aufweist.

3. System (02) nach Anspruch 2,
**dadurch gekennzeichnet,**
**dass** der Spatial-Light-Modulator (SLM) zumindest ein Flüssigkristallpanel (LC-Panel), insbesondere ein Flüssigkristallpanel auf Siliziumbasis (LCoS-Panel, Liquid Crystal on Silicon) aufweist.

4. System (02) nach Anspruch 3,
**dadurch gekennzeichnet,**
**dass** die Informationseinprägungsvorrichtung (08) mehrere, insbesondere drei Flüssigkristallpanele aufweist, wobei jeweils ein Flüssigkristallpanel Informationen einer bestimmten Farbe in den Strahlengang der Projektoreinrichtung einprägt.

5. System (02) nach einem der Ansprüche 1 bis 4,
**dadurch gekennzeichnet,**
**dass** die Projektoreinrichtung (01) eine Wechselvorrichtung (20) aufweist, die zur Aufnahme einer Filtereinrichtung (09) ausgebildet ist und die das Einführen und Entnehmen der Filtereinrichtung (09) in den bzw. aus dem Strahlengang (04) der Projektoreinrichtung (01) ermöglicht.

6. System (02) nach einem der Ansprüche 1 bis 5,
**dadurch gekennzeichnet,**
**dass** zumindest eine Projektionsfläche (07, 09) transluzent ausgebildet ist.

7. System (02) nach einem der Ansprüche 1 bis 5,
**dadurch gekennzeichnet,**
**dass** zumindest eine Projektionsfläche (05, 07) reflektierend ausgebildet ist.

8. System (02) nach einem der Ansprüche 1 bis 7,
**dadurch gekennzeichnet,**
**dass** die Filtereinrichtung (09, 11) als Phasenfilter ausgestaltet ist.

9. System (02) nach einem der Ansprüche 1 bis 8,
**dadurch gekennzeichnet,**
**dass** die zumindest eine Filtereinrichtung (11) im Ausgangsstrahlengang eine räumlich variable Filterrichtung aufweist.

10. System (02) nach einem der Ansprüche 1 bis 8,
**dadurch gekennzeichnet,**
**dass** die zumindest eine Filtereinrichtung (11) im Ausgangsstrahlengang als mobile Filtereinrichtung, insbesondere als binokulare Filtereinrichtung ausgebildet ist.

11. System (02) nach einem der Ansprüche 1 bis 10,
**dadurch gekennzeichnet,**
**dass** das System (02) zudem eine Ausgabevorrichtung (23) für akustische Informationen umfasst.

12. System (02) nach Anspruch 11,
**dadurch gekennzeichnet,**
**dass** die zumindest eine akustische Ausgabevorrichtung (23) als mobile, insbesondere persönliche Ausgabevorrichtung ausgestaltet ist.

13. System (02) nach einem der Ansprüche 11 oder 12,
**dadurch gekennzeichnet,**
**dass** die Projektoreinrichtung (01) und die zumindest eine akustische Ausgabevorrichtung (23) so ausgestaltet sind, dass diese informationstechnisch miteinander verbunden, insbesondere miteinander synchronisiert sind.

## Claims

1. A system (02) for the display of visual information comprising a projection device (01) comprising a light source (03) and an information imprinting device (08) which imprints at least two-dimensionally spatially and in particular temporally resolved information by means of phase modulation to a beam path (04) of the projection device (01), the system (02) comprising at least one first projection surface (05) having at least one sectionally phase-maintaining surface, the system comprising at least one first filtering device (11) which is optionally disposed in an output beam path between the projection surface (05) and an observation point (15), the system comprising a second filtering device (09) which is optionally disposed in the projection device in an input beam path between an output of the information imprinting device (08) and the projection surface (05), the phase modulation being converted into an amplitude modulation by means of the filtering device (09, 11) in each instance, and the system (02) comprising a second projection surface (07) and a third projection surface (21) which each have a non-phase-maintaining surface whereby the phase modulation is lost there, the third projection surface (21) being an object (21) to be illuminated, in particular an exhibition piece or an exhibit, the system being disposed for illuminating all projection surfaces with the projection device at once, and different forms of information display being achieved by means of the optional spatial position of the corresponding filtering devices (11, 09) and because of the phase-maintaining or non-phase-maintaining nature of the corresponding projection surfaces (05, 07, 21) and their position when being illuminated at the same time so that no information is displayed on the second or third projection surface when the second filtering device is not inserted into the projection device and an undifferentiated isotropic luminous field becomes visible irrespective of whether information is imprinted via phase modulation or not and information imprinted via phase modulation is selectively displayed by means of the first filtering device (11) owing to the phase-maintaining nature of the first projection surface (05), and so that a generally visible display of information takes place by inserting the second filtering device (09) into the projection device (01) irrespective of the phase-maintaining or non-phase-maintaining nature of the corresponding projection surfaces (05, 07, 21), irrespective of the corresponding observation point (12, 13, 14, 15) and irrespective of whether the first filtering device (11) is present or not.

2. The system (02) according to claim 1,
**characterized in that**
the information imprinting device (08) comprises at least one spatial light modulator (SLM).

3. The system (02) according to claim 2,
**characterized in that**
the spatial light modulator comprises at least one liquid crystal panel (LC panel), in particular a liquid crystal panel based on silicon (LCoS panel, Liquid Crystal on Silicon).

4. The system (02) according to claim 3,
**characterized in that**
the information imprinting device (08) comprises several, in particular three, liquid crystal panels, each liquid crystal panel imprinting information in a specific color to the beam path of the projection device.

5. The system (02) according to any one of the claims 1 to 4, **characterized in that**
the projection device (01) comprises a changing device (20) configured for receiving a filtering device (09), the changing device (20) enabling the insertion and extraction of the filtering device (09) into or out of the beam path (04) of the projection device (01).

6. The system (02) according to any one of the claims 1 to 5, **characterized in that**
at least one projection surface (07, 09) is translucent.

7. The system (02) according to any one of the claims 1 to 5, **characterized in that**
at least one projection surface (05, 07) is reflective.

8. The system (02) according to any one of the claims 1 to 7, **characterized in that**
the filtering device (09, 11) is designed as a phase filter.

9. The system (02) according to any one of the claims 1 to 8, **characterized in that**
the at least one filtering device (11) comprises a spatially variable filtering device in the output beam path.

10. The system (02) according to any one of the claims 1 to 8, **characterized in that**
the at least one filtering device (11) in the output beam path is formed as a mobile filtering device, in particular a binocular filtering device .

11. The system (02) according to any one of the claims 1 to 10, **characterized in that**
the system further comprises an output device (23) for acoustic information.

12. The system (02) according to claim 11,
**characterized in that**
the at least one acoustic output device (23) is designed as a mobile, in particular personal, output device.

13. The system (02) according to claim 11 or 12,
**characterized in that**
the projection device (01) and the at least one acoustic output device (23) are designed such that they are informationally connected, in particular synchronized with each other.

## Revendications

1. Système (02) pour l'affichage des informations visuelles comprenant un dispositif de projection (01) comprenant une source lumineuse (03) et un dispositif d'impression d'information (08) qui impressionne des informations résolues au moins spatialement de deux dimension et de préférence temporellement au moyen de la modulation de phase dans un trajet de rayonnement (04) du dispositif de projection (01), le système (02) comprenant au moins une première surface de projection (05) ayant au moins une surface maintenant la phase en section, le système comprenant au moins un premier dispositif de filtrage (11) qui est disposé sélectivement dans une sortie de trajet de rayonnement entre la surface de projection (05) et un point d'observation (15), le système comprenant un deuxième dispositif de filtrage (09) qui est disposé sélectivement dans le dispositif de projection dans une entrée de trajet de rayonnement entre une sortie du dispositif d'impression d'information (08) et la surface de projection (05), la modulation de phase étant convertie dans une modulation d'amplitude au moyen du dispositif de filtrage dans chaque cas, et le système (02) comprenant une deuxième surface de projection (07) et une troisième surface de projection (21) qui chacune a une surface ne maintenant pas la phase en raison de laquelle la modulation de phase est perdue là, la troisième surface de projection (21) étant un objet (21) à être illuminé, de préférence une pièce d'exposition ou un objet exposé, le système étant disposé pour illuminer toutes les surfaces de projection au même temps avec le dispositif de projection, et des formes différentes de l'affichage d'information étant atteintes au moyen de la position spatiale sélective des dispositifs de filtrage (11, 09) correspondants et en raison de la texture des surfaces de projection (05, 07, 21) correspondantes, la texture maintenant la phase ou ne maintenant pas la phase, et en raison de la position desdites surfaces de projection (05, 07, 21) quand elles sont illuminées au même temps de sorte que pas d'informations sont affichées sur la deuxième ou troisième surface de projection quand le deuxième dispositif de filtrage n'est pas inséré dans le dispositif de projection et un espace lumineux isotrope indifférencié devient visible indépendamment si l'information est impressionnée par la modulation de phase ou non et un affichage sélectif des informations impressionnées par la modulation de phase se passant au moyen du premier dispositif de filtrage (11) en raison de la texture maintenant la phase de la première surface de projection (05), et de sorte qu'un affichage d'informations se passe de manière généralement visible indépendamment de la texture maintenant la phase ou ne pas maintenant la phase des surfaces de projection (05, 07, 21) correspondantes, indépendamment du point d'observation (12, 13, 14, 15) correspondant et indépendamment de la présence du premier dispositif de filtrage (11) en insérant le deuxième dispositif de filtrage (09) dans le dispositif de projection (01).

2. Système (02) selon la revendication 1,
**caractérisé en ce que**
le dispositif d'impression d'information (08) comprend au moins un modulateur spatial de lumière (*spatial light modulator,* SLM).

3. Système (02) selon la revendication 2,
**caractérisé en ce que**
le modulateur spatial de lumière comprend au moins un panneau à cristaux liquides (panneau LC), de préférence un panneau à cristaux liquides sur silicium (panneau LCoS, *Liquid Crystal on Silicon).*

4. Système (02) selon la revendication 3,
**caractérisé en ce que**
le dispositif d'impression d'information (08) comprend plusieurs, de préférence trois, panneaux à cristaux liquides, chaque panneau à cristaux liquides impressionnant des informations dans une couleur spécifique dans le trajet de rayonnement du dispositif de projection.

5. Système (02) selon l'une quelconque des revendications 1 à 4, **caractérisé en ce que**
le dispositif de projection (01) comprend un dispositif de changement (20) configuré à recevoir un dispositif de filtrage (09), le dispositif de changement (20) permettant insérer et extraire le dispositif de filtrage (09) dans le ou du trajet de rayonnement (04) du dispositif de projection (01).

6. Système (02) selon l'une quelconque des revendications 1 à 5, **caractérisé en ce**
**qu'**au moins une surface de projection (07, 09) est translucide.

7. Système (02) selon l'une quelconque des revendications 1 à 5, **caractérisé en ce**
**qu'**au moins une surface de projection (05, 07) est réflective.

8. Système (02) selon l'une quelconque des revendications 1 à 7, **caractérisé en ce que**
le dispositif de filtrage (09, 11) est réalisé comme filtre de phase.

9. Système (02) selon l'une quelconque des revendications 1 à 8, **caractérisé en ce que**
l'au moins un dispositif de filtrage (11) comprend un dispositif de filtrage variable spatialement dans la sortie de trajet de rayonnement.

10. Système (02) selon l'une quelconque des revendications 1 à 8, **caractérisé en ce que**
l'au moins un dispositif de filtrage (11) dans la sortie de trajet de rayonnement est formé comme dispositif de filtrage mobile, de préférence comme dispositif de filtrage binoculaire.

11. Système (02) selon l'une quelconque des revendications 1 à 10, **caractérisé en ce que**
le système comprend en outre un dispositif de sortie (23) pour des informations acoustiques.

12. Système (02) selon la revendication 11,
**caractérisé en ce que**
l'au moins un dispositif de sortie (23) acoustique est réalisé comme dispositif de sortie mobile, de préférence personnel.

13. Système (02) selon la revendication 11 ou 12,
**caractérisé en ce que**
le dispositif de projection (01) et l'au moins un dispositif de sortie (23) acoustique sont réalisés de telle manière qu'ils sont reliés l'un à l'autre de la technique de l'information, de préférence ils sont synchronisés l'un à l'autre.
